Europäisches Patentamt

European Patent Office

Office européen des brevets

(11) Veröffentlichungsnummer: **0 325 665**

**A1**

(12) **EUROPÄISCHE PATENTANMELDUNG**

(21) Anmeldenummer: 88101067.2

(22) Anmeldetag: 26.01.88

(51) Int. Cl.⁴: **G01M 3/04 , E04D 13/00 , F24D 3/14 , G08B 21/00**

(43) Veröffentlichungstag der Anmeldung:
02.08.89 Patentblatt 89/31

(84) Benannte Vertragsstaaten:
AT BE CH DE ES FR GB GR IT LI LU NL SE

(71) Anmelder: **Kolbatz, Klaus-Peter**
**Langenauer Weg 21**
**D-1000 Berlin 27(DE)**

(72) Erfinder: **Kolbatz, Klaus-Peter**
**Langenauer Weg 21**
**D-1000 Berlin 27(DE)**

(74) Vertreter: **Wablat, Wolfgang**
**Patentanwalt Dr.-Ing. Dr. jur. Dipl.-Chem. W.**
**Wablat Potsdamer Chaussee 47**
**D-1000 Berlin 38(DE)**

(54) **Ortung von in eine geschlossene Decke eingedrungener Flüssigkeit, insbesondere Wasser.**

(57) Es soll erreicht werden, daß beispielsweise bei einem Wasserdurchbruch eines Rohrsystems einer in der Decke verlegten Fußbodenheizung, die schadhafte Stelle genau lokalisiert werden kann, so daß der Fußboden gezielt nur an dieser Stelle in einem eng begrenzten Bereich aufgestemmt werden muß. Dies erfolgt mittels eines als Feuchtigkeitssensor ausgebildeten elektrisch leitenden Gitters (10), welches in geeignetem Abstand unterhalb der Fußbodenheizung angeordnet ist und in Koordinatenform verlegt ist, wobei zwischen den Schnittpunkten der sich kreuzenden Gitterelemente jeweils elektrische Isolationen (11) angebracht sind. Die Außenenden (A bis J und 1 bis 9) des Gitters (10) sind als Meßstellen (12) ausgebildet, um jeweils an diesen Stellen den aufgrund der elektrischen Leitfähigkeit der eingedrungenen Flüssigkeit sich einstellenden Ohmschen Widerstand messen zu können, der als Nachweis des aufgefundenen Schadens dient.

Fig. 1

## Verfahren und Anordnung zur Ortung von in eine geschlossene Decke eingedrungener Flüssigkeit, insbesondere Wasser

Die Erfindung betrifft ein Verfahren zur Ortung von in eine geschlossene Decke eingedrungener Flüssigkeit, insbesondere Wasser, und eine Anordnung zur Durchführung dieses Verfahrens.

Bei Fußbodenheizungen, die beispielsweise aus einem in Meanderform im Fußboden verlegten, beheizbaren Wasserrohrsystem bestehen, kann der Fall eintreten, daß das Rohrsystem im Laufe der Zeit an nicht vorhersehbaren Stellen undicht wird und Wasser in den Boden eindringt.

Zum Auffinden der schadhaften Stellen mußte bisher ungezielt der Fußboden aufgestemmt werden, wodurch umfangreiche Beschädigungen des Fußbodens erfolgten.

Der Erfindung liegt deshalb die Aufgabe zugrunde, ein Verfahren und eine Anordnung zur Durchführung dieses Verfahrens zu schaffen, welches auf einfache Weise die Ortung von in den Fußboden eingedrungener Flüssigkeit, insbesondere Wasser, ermöglicht.

Diese Aufgabe wird erfindungsgemäß dadurch gelöst, daß

a) unter der Decke (15) und in einem entsprechenden Abstand von dieser als Feuchtigkeitssensoren ausgebildete elektrisch leitende Gitter (10) in einer Koordinatenform verlegt werden,

b) zwischen den Schnittpunkten der sich kreuzenden Gitterelemente jeweils elektrische Isolationen (11) angebracht werden, und

c) die Außenenden (A bis J und 1 bis 9) des Gitters (10) als Meßstellen (12) ausgebildet werden, um jeweils an diesen Stellen den aufgrund der elektrischen Leitfähigkeit der eingedrungenen Flüssigkeit sich einstellenden Ohmschen Widerstand zu messen.

Weitere vorteilhafte Ausgestaltungen der Erfindung sind in den Unteransprüchen angegeben.

Die mit der Erfindung erzielten Vorteile bestehen insbesondere darin, daß beispielsweise bei einem Wasserdurchbruch im Rohrsystem die schadhafte Stelle genau lokalisiert werden kann und der Fußboden gezielt nur an dieser Stelle in einem eng begrenzten Bereich aufgestemmt werden muß. Dadurch bleiben in vielen Fällen größere Arbeiten und Beschädigungen des Bodens erspart.

Ein Ausführungsbeispiel der Erfindung ist in der Zeichnung dargestellt. Es zeigen

Fig. 1 den prinzipiellen Aufbau eines als Gitter ausgebildeten erfindungsgemäßen Feuchtigkeitssensors in Draufsicht, und

Fig. 2 eine Schnittdarstellung einer Fußbodenheizung mit unter dem beheizbaren Flussigkeitsrohrsystem verlegten gitterartigen Feuchtigkeitssensoren nach Fig. 1.

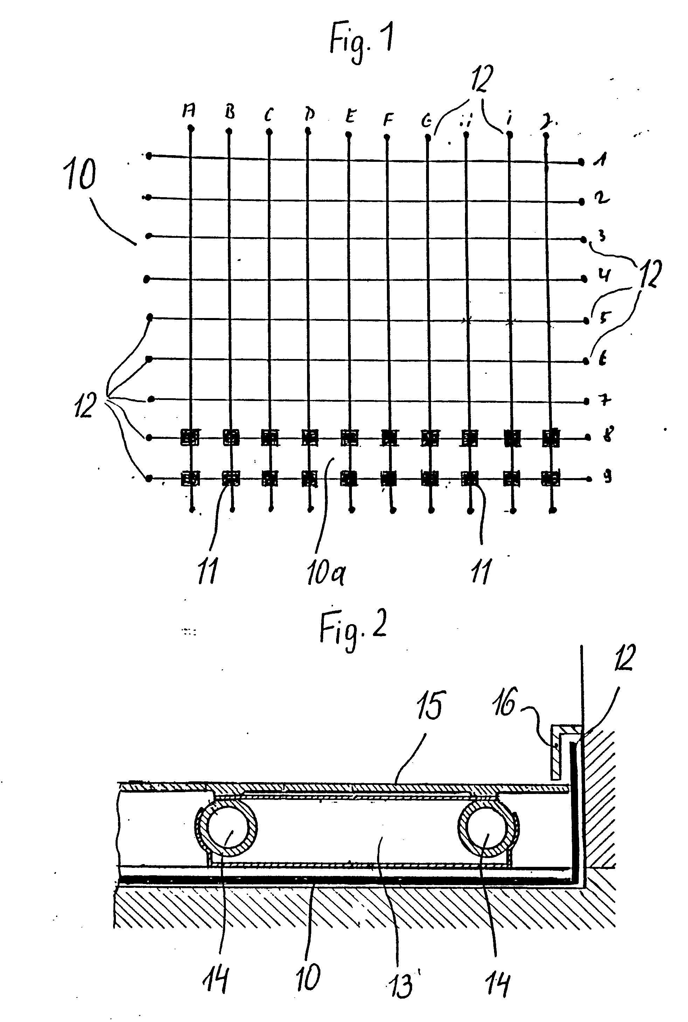

Wie aus Fig. 1 ersichtlich ist, besteht der Feuchtigkeitssensor zur Ortung von in eine geschlossene Decke eingedrungener Flüssigkeit im wesentlichen aus einem in Koordinatenform ausgebildeten elektrisch leitenden Gitter 10, wobei jeweils zwischen den Schnittpunkten der sich kreuzenden Gitterelemente eine elektrische Isolation 11 vorgesehen ist.

Die Außenenden A bis J und 1 bis 9 des Gitters 10 sind als Meßstellen 12 ausgebildet. Die Meßstellen 12 sind mittels eines handelsüblichen spannungsführenden Meßgerätes abgreifbar, um den aufgrund der elektrischen Leitfähigkeit der Flüssigkeit sich einstellenden Ohmschen Widerstand messen zu können, falls sich Flüssigkeit unterhalb der geschlossenen Decke ansammeln sollte.

In Fig. 2 ist eine vorteilhafte Anordnung zur Durchführung des Ortungs-Verfahrens dargestellt, und zwar am Beispiel einer Fußbodenheizung 13, die aus einem Wasserrohrsystem 14 besteht, welches unterhalb einer geschlossenen Decke 15 aus beispielsweise speziellen Estricharten verlegt ist. In einem entsprechenden Abstand unter dem Wasserrohrsystem 14 ist das als Feuchtigkeitssensor wirkende elektrisch leitende Gitter 10 angeordnet, wobei die als Meßstellen 12 ausgebildeten Außenenden des Gitters 10 abgewinkelt nach oben aus der Decke 15 herausgeführt und vorteilhaft unter einer Scheuerleiste 16 versteckt untergebracht sind. Im Falle eines Schadens im Wasserrohrsystem muß zur Ortung bzw. Lokalisierung der Schadensstelle die Scheuerleiste 16 entfernt werden, so daß die Meßstellen 12 zur Messung des Ohmschen Widerstandes freigelegt sind. Dazu ist es vorteilhaft, die Leisten durch mühelos entfernbare Steckverbindungen an der Wand zu befestigen. Alle Meßstellen 12 des elektrisch leitenden Gitters 10 müssen mit einem handelsüblichen Meßgerät durchgemessen werden. Die elektrische Leitfähigkeit des aus dem Rohrsystem austretenden Wassers hat zur Folge, daß an der Schadensstelle ein Ohmscher Widerstand gemessen wird. Auf diese Weise ist dann die Schadensstelle genau lokalisierbar und die Decke 15 muß nur an dieser Stelle in einem begrenzten Bereich aufgestemmt werden, um die erforderlichen Reparaturen durchführen zu können.

Zur Früherkennung eines eventuellen Schadens kann auch vorteilhaft in einer weiteren Ausführung des Erfindungsgedankens ein Wasseralarmmelder an die Außenenden A bis J und 1 bis 9 des Gitters 10 ständig angeschlossen sein, der einen Frühalarm auslösen kann, so daß auch die stets auftretenden hohen Folgeschäden bei einem Wasserbruch verhindert werden können. Als Schaltelement für den Flüssigkeitsalarmmelder kann ein auf Flüssigkeitsansammlungen ansprechender Schalter vorteilhaft eingesetzt werden, der mit dem Flüssigkeitsalarm melder verbunden ist, der im Schadensfall einen akustischen und/oder optischen Alarm auslöst.

Ein weiteres Anwendungsbeispiel des Erfindungsgedankens mit den als Feuchtigkeitssensoren ausgebildeten elektrisch leitenden Gittern 10, die in einer Koordinatenform mit herausgeführten Meßstellen verlegt werden, bezieht sich auf sogenannte Naßdächer. Bei diesen kann im Laufe der Zeit eine aus Büffelhaut bestehende Schicht austrocknen, so daß undichte Stellen im Dach entstehen, die frühzeitig angezeigt werden sollten, um größere Folgeschäden zu vermeiden.

Je nach Dichte bzw. Größe der Gitterabstände 10a ist eine punktgenaue Eingrenzung der schadhaften Stelle in der Fußbodenheizung oder dem Naßdach möglich.

Erwähnt sei auch noch, daß das mattenartig ausgebildete Gitter 10 als Feuchtigkeitssensor in den unterschiedlichsten Größen ausgeführt werden kann und von keiner bestimmten Größenordnung abhängig ist.

## Ansprüche

1. Verfahren zur Ortung von in eine geschlossene Decke eingedrungener Flüssigkeit, insbesondere Wasser,
dadurch gekennzeichnet, daß
a) unter der Decke (15) und in einem entsprechenden Abstand von dieser als Feuchtigkeitssensoren ausgebildete elektrisch leitende Gitter (10) in einer Koordinatenform verlegt werden,
b) zwischen den Schnittpunkten der sich kreuzenden Gitterelemente jeweils elektrische Isolationen (11) angebracht werden, und
c) die Außenenden (A bis J und 1 bis 9) des Gitters (10) als Meßstellen (12) ausgebildet werden, um jeweils an diesen Stellen den aufgrund der elektrischen Leitfähigkeit der eingedrungenen Flüssigkeit sich einstellenden Ohmschen Widerstand zu messen.

2. Verfahren nach Anspruch 1, **dadurch gekennzeichnet**, daß die Messung des Ohmschen Widerstandes mittels eines spannungsführenden Meßgerätes erfolgt.

3. Verfahren nach Anspruch 1, **dadurch gekennzeichnet**, daß die elektrisch leitenden Feuchtigkeitssensoren (10) aus Metalldrähten hergestellt werden, die mehrere flexible Adern aufweisen.

4. Anordnung zur Durchführung des Verfahrens nach Anspruch 1, **dadurch gekennzeichnet**, daß ein in einer geschlossenen Decke eingebrachtes Flüssigkeitsrohrsystem (14) einer Fußbodenheizung in einem geeigneten Ab stand mit einem als Feuchtigkeitssensor wirkenden elektrisch leitenden Gitter (10) unterlegt ist, und das Flüssigkeitsrohrsystem (14) von einer Decke (15) abgeschlossen ist.

5. Anordnung nach Anspruch 4, **dadurch gekennzeichnet**, daß die als Meßstellen (12) ausgebildeten Außenenden des Gitters (10) abgewinkelt nach oben aus der Decke (15) herausgeführt und unter einer Verblender-/Scheuerleiste (16) angeordnet sind.

6. Anordnung nach Anspruch 5, **dadurch gekennzeichnet**, daß zur raschen Lokalisierung einer Schadensstelle im Flüssigkeitsrohrsystem (14) die Verblender-/Scheuerleiste (16) leicht entfernbar befestigt ist, um die Meßstellen ohne Mühe freizulegen.

7. Anordnung nach Anspruch 4 bis 6, **dadurch gekennzeichnet**, daß an der Meßstelle (12) als Nachweis des aufgefundenen Schadens ein Ohmscher Widerstand gemessen wird.

8. Anordnung nach Anspruch 4 und 5, **dadurch gekennzeichnet**, daß zur Früherkennung eines Flüssigkeitsschadens unterhalb der abgeschlossenen Decke (15) an die Außenenden (A bis J und 1 bis 9) des Gitters (10) ein Flüssigkeitsalarmmelder angeschlossen ist, der mit einem als Schaltelement auf Flüssigkeitsansammlungen ansprechenden Schalter verbunden ist, und im Alarmfall einen akustischen und/oder optischen Alarm des Alarmmelders auslöst.

9. Anordnung nach den Ansprüchen 4 bis 8, **dadurch gekennzeichnet**, daß das als Feuchtigkeitssensor ausgebildete elektrisch leitende mattenartige Gitter (10) zum Nachweis von Wasseransammlungen unterhalb von sogenannten Naßdächern ausgebildet ist.

10. Anordnung nach den Ansprüchen 4 bis 8, **dadurch gekennzeichnet**, daß das Gitter (10) zur punktgenauen Eingrenzung von Schadstellen im Wasserrohrsystem von Fußbodenheizungen oder Naßdächern in den unterschiedlichsten Größen und Dichten der Gitterabstände (10a) ausgeführt werden kann.

3

Bezugszeichenliste

A bis J =⎫
⎪
⎪
⎬ Außenenden des in Koordinatenform ausgebildeten
⎪ Gitters 10
⎪
1 bis 9 =⎭

10 = elektrisch leitendes Gitter
10 a = Gitterabstand
11 = Isolation
12 = die als Meßstellen ausgebildeten Außenenden des Gitters 10
13 = Fußbodenheizung
14 = Flüssigkeitsrohrsystem
15 = Decke
16 = Scheuerleiste

## Fig. 1

## Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 404 516 (V.R. JOHNSON)<br>* Figur 2; Zusammenfassung *<br>--- | 1,2 | G 01 M 3/04<br>E 04 D 13/00<br>F 24 D 3/14<br>G 08 B 21/00 |
| A | US-A-4 110 945 (J.P. SHEAHAN)<br>* Figur 1; Spalte 2, Zeilen 22-25 *<br>--- | 8 | |
| A | DE-A-3 011 500 (SIEMENS)<br>* Figur 1; Anspruch 1 *<br>--- | 7 | |
| A | US-A-4 598 273 (B.O. BRYAN et al.)<br>* Figur 1; Zusammenfassung *<br>--- | 9 | |
| A | DE-A-3 539 946 (W.L. GORE & CO)<br>* Figur 2; Spalte 2, Zeile 56 - Spalte 3, Zeile 5 *<br>--- | | |
| A | US-A-4 490 053 (C.J. COSTON et al.)<br>* Figur 5; Zusammenfassung *<br>--- | | |
| A | DE-A-3 605 633 (G. NEUMANN)<br>* Figur 1; Zusammenfassung *<br>--- | | **RECHERCHIERTE SACHGEBIETE (Int. Cl.4)** |
| A | US-A-4 297 686 (M. DALE TOM)<br>* Figur 7; Zusammenfassung *<br>----- | | G 08 B 21/00<br>E 04 D 13/00<br>F 24 D 3/12<br>F 24 D 3/14<br>G 01 M 3/04<br>G 01 M 3/16 |

Der vorliegende Recherchenbericht wurde für alle Patentansprüche erstellt

| Recherchenort | Abschlußdatum der Recherche | Prüfer |
|---|---|---|
| BERLIN | 29-09-1988 | BREUSING J |